# EUROPEAN PATENT APPLICATION

(11) **EP 2 806 182 A1**
(43) Date of publication of application: **26.11.2014**
(21) Application number: 13184767.5
(22) Date of filing: 17.09.2013
(51) Int. Cl.: F16F 1/40, B60G 11/22

(54) **Rubber spring, rubber suspension system and truck**

(30) Priority: 22.05.2013 CN 201310192280
(71) Applicant: Zhuzhou Times New Material Technology Co., Ltd., Hi-Tech Development Zone Zhuzhou City Hunan 412007 (CN)
(72) Inventor: Liu, Jianxun, 412007 Zhuzhou City (CN); Zou, Bo, 412007 Zhuzhou City (CN); Guo, Chunjie, 412007 Zhuzhou City (CN); Peng, Lihua, 412007 Zhuzhou City (CN); Wu, Mingzhu, 412007 Zhuzhou City (CN); Ai, Min, 412007 Zhuzhou City (CN); Zhong, Haibing, 412007 Zhuzhou City (CN); Zhang, Yaxin, 412007 Zhuzhou City (CN)
(74) Representative: Zacco Sweden AB

(57) **Abstract**

The present application provides a rubber spring, including a first mounting plate (201) and a second mounting plate (204), the first mounting plate (201) having a first V-shaped plate with an opening angle larger than 90°, and the second mounting plate (204) having a second V-shaped plate with an opening angle larger than 90°; and a plurality of rubber layers (202) arranged between the first V-shaped plate (201) and the second V-shaped plate (204), wherein each two adjacent rubber layers (202) are separated by an intermediate plate (203), the intermediate plate (203) is a V-shaped plate with an opening angle larger than 90°, and openings of the first V-shaped plate, the second mounting plate (204) and the intermediate plate (203) are facing the same direction. The present application further provides a rubber suspension system and a truck.

## Description

### FIELD OF THE INVENTION

The present application relates to the technical field of suspensions, and particularly to a rubber spring, a rubber suspension system and a truck.

### BACKGROUND OF THE INVENTION

A rubber suspension is a new-style suspension system. The rubber has characteristics of a large deformation and a variable stiffness, thus the rubber suspension has an excellent load bearing capacity and can ensure a good ride quality for a vehicle as a load of the vehicle changes. The rubber suspension is easy to assemble and disassemble, and has characteristics of lubrication-free and maintenance free. More importantly, the rubber suspension has a dead weight less than that of a conventional leaf spring suspension, thereby according with the development trend of lightweight vehicles and having a good fuel economy. The rubber suspension has been widely used in both road vehicles and off-highway vehicles.

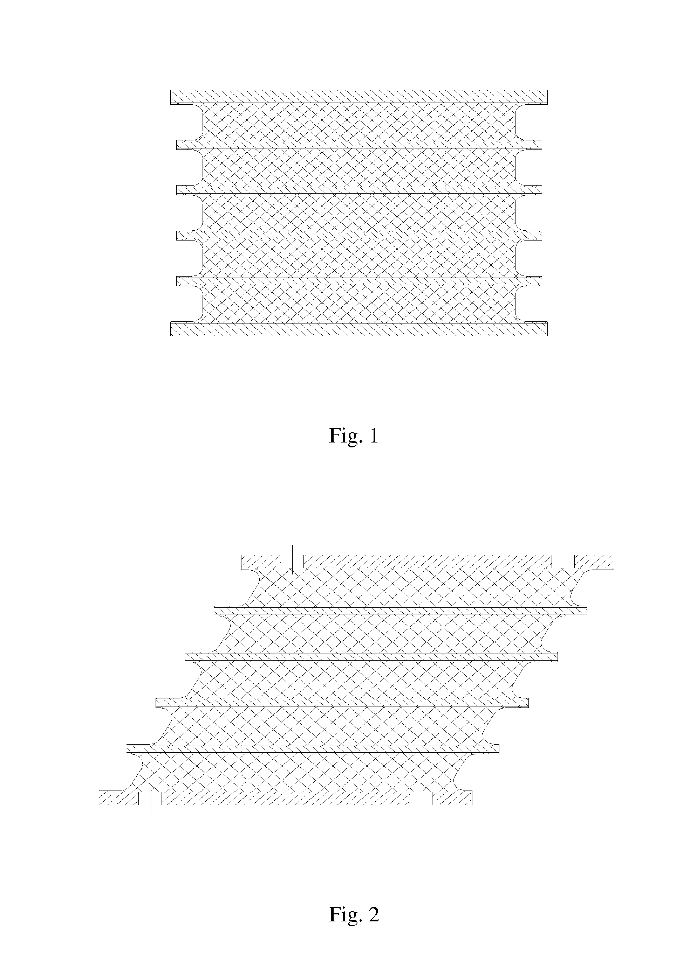

In an existing rubber suspension, a rubber spring is a straight rubber stack as shown in Figures 1 and 2, a push rod is a straight push rod arranged longitudinally, and no specific transverse position-limiting device is provided. When both the road condition and the load control of a vehicle are good, the rubber suspension with such rubber structure can meet the requirement of transverse stability of a vehicle.

However, not the road condition and load control of all of vehicles are appropriate. In a case of the road condition and load control of a vehicle being inappropriate, a yawing, or even a rollover of the vehicle, which uses the rubber suspension having the straight rubber spring and a longitudinally arranged straight push rod, may happen when the vehicle is turning or is driving in a rough road, since the straight rubber spring has a relatively small transverse stiffness which is generally below 1 KN/mm, and no specific transverse position-limiting device is provided.

In order to solve the above problems, a V-shaped push rod may be adopted. However, the V-shaped push rod requires more arrangement space, and its working life may be greatly reduced in poor road conditions.

Therefore, a technical problem to be solved presently by those skilled in the art is to improve a transverse load bearing capacity of a vehicle and reduce a probability of occurrence of yawing or rollover of the vehicle.

### SUMMARY OF THE INVENTION

In view of this, an object of the present application is to provide a rubber spring, so as to improve a transverse load bearing capacity of a vehicle and reduce a probability of occurrence of yawing or rollover of the vehicle.

Another object of the present application is to provide a rubber suspension system and a truck both having the rubber spring.

In order to achieve the above objects, the present application provides the following technical solutions.

A rubber spring, including:
a first mounting plate and a second mounting plate, the first mounting plate having a first V-shaped plate with an opening angle larger than 90°, and the second mounting plate having a second V-shaped plate with an opening angle larger than 90°; and
a plurality of rubber layers arranged between the first V-shaped plate and the second V-shaped plate, wherein each two adjacent rubber layers are separated by an intermediate plate, the intermediate plate is a V-shaped plate with an opening angle larger than 90°, and openings of the first V-shaped plate, the second mounting plate and the intermediate plate are facing the same direction.

Preferably, in the rubber spring, the first mounting plate and the second mounting plate are each provided with a mounting hole through which a bolt is passed.

Preferably, in the rubber spring, the opening angle of the first V-shaped plate is ranged from 100° to 150°;
the opening angle of the second mounting plate is ranged from 100° to 150°; and the opening angle of the intermediate plate is ranged from 100° to 150°.

Preferably, in the rubber spring, opening angles of the first V-shaped plate, the second mounting plate and the intermediate plate are equal to each other.

Preferably, in the rubber spring, the first V-shaped plate, the second mounting plate and the intermediate plate each have a turning part of a circular arc transition.

Preferably, in the rubber spring, the rubber layer has a thickness ranged from 5mm to 50mm; and;
the rubber spring has a height ranged from 50mm to 300mm.

A rubber suspension system includes an equalizing beam, a rubber spring and a saddle, wherein the rubber spring is one of the above rubber springs;
the first mounting plate is connected to the equalizing beam, and the second mounting plate is connected to the saddle.

Preferably, in the rubber suspension system, the rubber springs are mounted in pairs and a mounting angle of two rubber springs is ranged from 30° to 80°.

Preferably, the rubber suspension system further includes a position-limiting block mounted on a frame longitudinal beam of the rubber suspension system; and
a distance from the lowest end of the position-limiting block to the uppermost end of the equalizing beam is ranged from 25mm to 65mm.

A truck includes a frame, a rubber suspension system and an axle, the rubber suspension system is one of the above rubber suspension systems, the equalizing beam is connected to the axle, and the saddle is connected to the frame.

As can be seen from the above technical solutions, in the rubber spring according to the present application, each of the two mounting plates is designed as a V-shaped plate with an opening angle larger than 90°, the plurality of rubber layers are provided between the two V-shaped plates, and each two adjacent rubber layers are separated by the intermediate plate. A frame of the rubber spring is of a V-shaped plate structure, which can withstand not only a longitudinal force but also a transverse force, thereby improving the transverse stability of the vehicle and prolonging the service life of the push rod remarkably. The present application may improve the transverse load bearing capacity of the vehicle and reduce the probability of occurrence of yawing or rollover of the vehicle.

The suspension using the rubber spring according to the present application may have a certain transverse stiffness while meeting the vertical and longitudinal load bearing capacities, and the transverse stiffness can reach 3 to 15kN/mm by adjusting the hardness of the rubber material of the rubber layer When a vehicle is turning or is running on a rough road, the vehicle using the rubber spring according to the present application can withstand a large transverse force, so as to reduce the yawing of the vehicle and improve the transverse stability of the vehicle.

### BRIEF DESCRIPTION OF THE DRAWINGS

For more clearly illustrating embodiments of the present application or the technical solution in the prior art, drawings referred to describe the embodiments or the prior art will be briefly described hereinafter. Apparently, the drawings in the following description are only several embodiments of the present application, and for the person skilled in the art other drawings may be obtained based on these drawings without any creative efforts.

Figure 1 is a schematic view showing the structure of a rubber spring in the prior art;

Figure 2 is a side view of Figure1;

Figure 3 is a schematic view showing the structure of a rubber spring according to an embodiment of the present application;

Figure 4 is a sectional view taken along line A-A in Figure 3;

Figure 5 is a schematic view showing the structure of a rubber suspension system according to an embodiment of the present application; and

Figure 6 is a schematic view showing the structure of a rubber suspension system according to another embodiment of the present application.

Reference numerals in the Figures:

| | | |
|---|---|---|
| 1 equalizing beam, | 2 rubber spring, | 3 saddle, |
| 4 push rod, | 5 position-limiting block, | 6 bolt, |
| 7 absorber, | 8 frame longitudinal beam, | 201 first mounting plate, |
| 202 rubber layer, | 203 intermediate plate, and | 204 second mounting plate. |

### DETAILED DESCRIPTION OF THE INVENTION

An object of the present application is to provide a rubber spring so as to improve a transverse load bearing capacity of a vehicle and reduce a probability of occurrence of yawing or rollover of the vehicle.

Another object of the present application is to provide a rubber suspension system and a truck both having the rubber spring.

The technical solutions in the embodiments of the present application will be described clearly and completely hereinafter in conjunction with the drawings in the embodiments of the present application. Apparently, the described embodiments are only a part of the embodiments of the present application, rather than all embodiments. Based on the embodiments in the present application, all of other embodiments, made by the person skilled in the art without any creative efforts, fall into the protection scope of the present application.

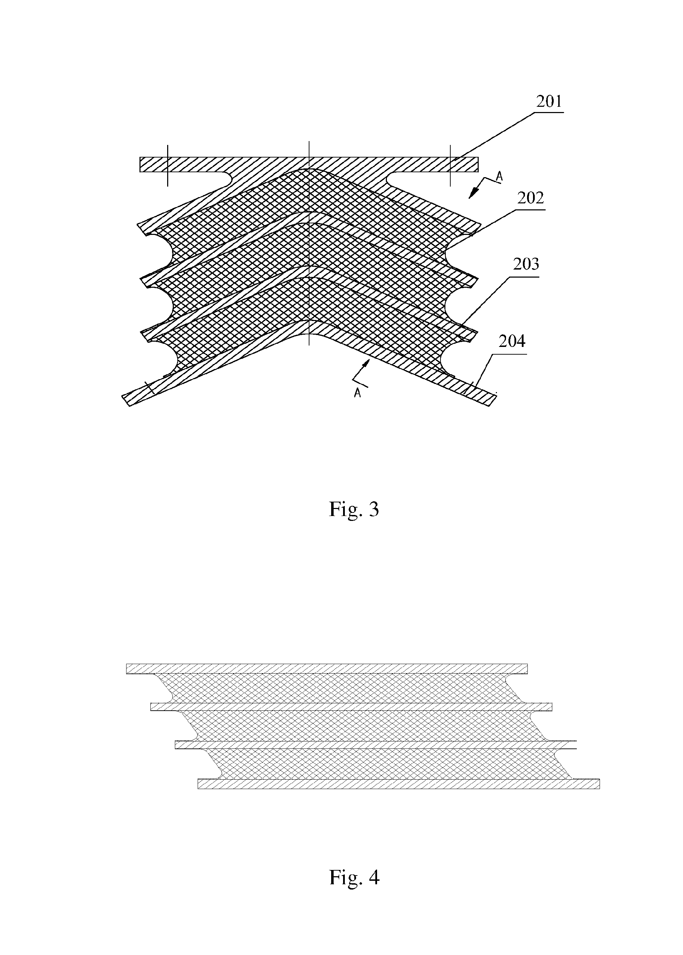

Reference is made to Figures 3 and 4. Figure 3 is a schematic view showing the structure of a rubber spring according to an embodiment of the present application; and Figure 4 is a sectional view taken along line A-A in Figure 3.

The rubber spring according to the embodiment of the present application includes a first mounting plate 201, a second mounting plate 204, a rubber layer 202 and an intermediate plate 203.

The first mounting plate 201 has a first V-shaped plate with an opening angle larger than 90°, and the second mounting plate 204 has a second V-shaped plate with an opening angle larger than 90°. The first mounting plate 201 and the second mounting plate 204 are configured to connect with other components on the rubber suspension system. The first mounting plate 201 and the second mounting plate 204A are each provided with a mounting hole through which a bolt is passed, and may be connected to other components via a bolt. The connecting manner and structure are the same as those in the prior art, which are omitted herein for simplicity.

A plurality of rubber layers 202 are arranged between the first V-shaped plate and the second V-shaped plate, each two adjacent rubber layers 202 are separated by the intermediate plate 203. The intermediate plate 203 is a V-shaped plate with an opening angle larger than 90°. The first V-shaped plate, the second mounting plate 204 and the intermediate plate 203 have the same opening direction.

Two plate surfaces, forming an angle, of the V-shaped plates (the first V-shaped plate, the second V-shaped plate and the intermediate plate 203) may be plane surfaces or curved surfaces, which are not limited herein. To facilitate machining, the plate surface of the V-shaped plate is preferably a plane surface.

In the rubber spring according to the present application, each of the two mounting plates (the first mounting plate 201 and the second mounting plate 204) is designed as a V-shaped plate with an opening angle larger than 90°, the plurality of rubber layers 202 are provided between the two V-shaped plates, and each two adjacent rubber layers 202 are separated by the intermediate plate 203. A frame of the rubber spring is of a V-shaped plate structure, which can withstand not only a longitudinal force but also a transverse force, thereby improving the transverse stability of the vehicle and prolonging the service life of the push rod remarkably. The present application may improve the transverse load bearing capacity of the vehicle and reduce the probability of occurrence of yawing or rollover of the vehicle.

The suspension using the rubber spring according to the present application may have a certain transverse stiffness while meeting the vertical and longitudinal load bearing capacities, and the transverse stiffness can reach 3 to 15kN/mm by adjusting the hardness of the rubber material of the rubber layer 202. When a vehicle is turning or is running on a rough road, the vehicle using the rubber spring according to the present application can withstand a large transverse force, so as to reduce the yawing of the vehicle and improve the transverse stability of the vehicle.

In a specific example of the present application, the opening angle of the first V-shaped plate ranges from 100° to 150°, and accordingly, the opening angle of the second V-shaped plate 204 ranges from 100° to150°, and the opening angle of the intermediate plate 203 ranges from 100° to150°.

Although the first V-shaped plate, the second V-shaped plate and the intermediate plate 203 have opening angles with the same range, the opening angles thereof can be different from each other as long as the opening angles are within the range of 100° to 150°, and the first V-shaped plate, the second V-shaped plate and the intermediate plate 203 are not required to have the same opening angle. It has been verified that, the opening angle ranged from 100° to 150° may ensure an equalizing bearing of a longitudinal load bearing force and a transverse load bearing force.

Preferably, the opening angles of the first V-shaped plate, the second mounting plate 204 and the intermediate plate 203 are equal to each other. The opening angles of the first V-shaped plate, the second mounting plate 204 and the intermediate plate 203 are designed to be equal to each other, which may ensure the rubber layers 202 having the same thicknesses, thereby ensuring the same cushioning effect in any positions.

In order to increase the strength and prolong the working life, a turning part of each of the first V-shaped plate, the second mounting plate 204 and the intermediate plate 203 is designed as a circular arc transition. The turning part is a connecting portion of the two plate surfaces, forming an angle, of the V-shaped plate.

In a specific example of the present application, the rubber layer 202 has a thickness ranged from 5mm to 50mm, and the rubber spring has a height ranged from 50mm to 300mm.

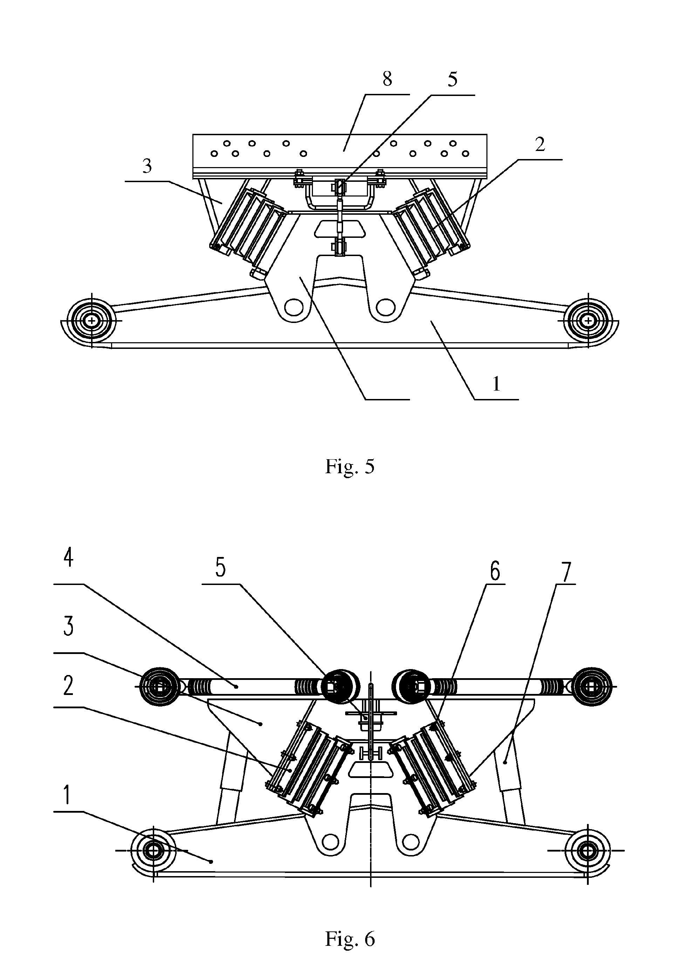

Reference is made to Figures 5 and 6. Figure 5 is a schematic view showing the structure of a rubber suspension system according to an embodiment of the present application; and Figure 6 is a schematic view showing the structure of a rubber suspension system according to another embodiment of the present application.

The rubber suspension system according to an embodiment of the present application includes an equalizing beam 1, a rubber spring 2 and a saddle 3. The rubber spring 2 is the rubber spring according to the above embodiments, the first mounting plate 201 is connected to the equalizing beam 1, and the second mounting plate 204 is connected to the saddle 3.

The rubber suspension system according to the present application having the rubber spring in the above embodiments also has all of the technical effects of the rubber spring, which will not be described in detail herein.

Under a good road condition, a rubber suspension system having a rubber spring 2 according to the above embodiments and a longitudinal arranged straight push rod 4 may be adopted. Since the transverse force can be withstood by the rubber spring 2, an additional transverse position-limiting device is not required.

Under a poor road condition, a rubber suspension system having a rubber spring 2 according to the above embodiments and a V-shaped push rod 4 may be adopted. The transverse force can be withstood by the V-shaped push rod and the rubber spring 2, which may not only improve the transverse stability of the vehicle, but also prolong the working life of the push rod significantly.

The rubber suspension system according to the present application is connected to an axle via mounting holes in spherical hinges of the equalizing beam 1, and is connected to the frame via connecting holes on an upper portion of the saddle 3. The rubber springs 2 are mounted in pairs, and a mounting angle of the two rubber springs 2 ranges from 30° to 80°. The V-shaped openings of the rubber springs may be facing up uniformly (as shown in Figure 5), and also may be facing down uniformly (as shown in Figure 6).

In a preferred embodiment of the present application, the present application may further include a position-limiting block 5 mounted on a frame longitudinal beam 8 of the rubber suspension system. A distance from the lowest end of the position-limiting block 5 to the uppermost end of the equalizing beam 1 ranges from 25mm to 65mm. The position-limiting block 5 can protect other components of the suspension system when the vehicle is subjected to a large impact load.

An embodiment of the present application further provides a truck, including a frame, a rubber suspension system and an axle. The rubber suspension system is the rubber suspension system according to the above embodiments, the equalizing beam 1 is connected to the axle, and the saddle 3 is connected to the frame.

The truck according to the present application using the rubber suspension system according to the above embodiments has all of the technical effects of the rubber suspension system, which will not be described in detail herein.

Besides being used in the truck, the rubber suspension system according to the embodiments of the present application may also be applied to engineering vehicles and other vehicles, and the specific applications of the rubber suspension system is not limited in the present application.

In conclusion, the rubber spring of the present application has a transverse stiffness ranged from 3 to lSkN/mm, such that the elastic components of the suspension may withstand a part of the transverse force, thereby improving the transverse stability of the vehicle and significantly increasing the working life of other load bearing components for withstanding the transverse force, such as the push rod. The rubber suspension system according to the present application improves the transverse stability of the vehicle significantly without adding other additional components.

The above embodiments are described in a progressive manner. Each of the embodiments is mainly focused on describing its differences from other embodiments, and references may be made among these embodiments with respect to the same or similar portions among these embodiments.

Based on the above description of the disclosed embodiments, the person skilled in the art is capable of carrying out or using the present application. It is obvious for the person skilled in the art to make many modifications to these embodiments. The general principle defined herein may be applied to other embodiments without departing from the spirit or scope of the present application. Therefore, the present application is not limited to the embodiments illustrated herein, but should be defined by the broadest scope consistent with the principle and novel features disclosed herein.

## Claims

1. A rubber spring, comprising:
a first mounting plate (201) and a second mounting plate (204), the first mounting plate (201) having a first V-shaped plate with an opening angle larger than 90°, and the second mounting plate (204) having a second V-shaped plate with an opening angle larger than 90°; and
a plurality of rubber layers (202) arranged between the first V-shaped plate and the second V-shaped plate, wherein each two adjacent rubber layers (202) are separated by an intermediate plate (203), the intermediate plate (203) is a V-shaped plate with an opening angle larger than 90°, and openings of the first V-shaped plate, the second mounting plate (204) and the intermediate plate (203) are facing the same direction.

2. The rubber spring according to claim 1, wherein the first mounting plate (201) and the second mounting plate (204) are each provided with a mounting hole through which a bolt is passed.

3. The rubber spring according to claim 2, wherein the opening angle of the first V-shaped plate is ranged from 100° to 150°;
the opening angle of the second mounting plate (204) is ranged from 100° to 150°; and the opening angle of the intermediate plate (203) is ranged from 100° to 150°.

4. The rubber spring according to claim 3, wherein opening angles of the first V-shaped plate, the second mounting plate (204) and the intermediate plate (203) are equal to each other.

5. The rubber spring according to claim 1, wherein each of the first V-shaped plate, the second mounting plate (204) and the intermediate plate (203) each have a turning part of a circular arc transition.

6. The rubber spring according to claim 1, wherein the rubber layer (202) has a thickness ranged from 5mm to 50mm; and
the rubber spring has a height ranged from 50mm to 300mm.

7. A rubber suspension system, comprising an equalizing beam (1), a rubber spring (2) and a saddle (3), wherein the rubber spring (2) is the rubber spring according to any one of claims 1 to 6;
the first mounting plate (201) is connected to the equalizing beam (1), and the second mounting plate (204) is connected to the saddle (3).

8. The rubber suspension system according to claim 7, wherein the rubber springs (2) are mounted in pairs, and a mounting angle of two rubber springs (2) is ranged from 30° to 80°.

9. The rubber suspension system according to claim 7, further comprising a position-limiting block (5) mounted on a frame longitudinal beam (8) of the rubber suspension system;
wherein a distance from the lowest end of the position-limiting block (5) to the uppermost end of the equalizing beam (1) is ranged from 25mm to 65mm.

10. A truck, comprising a frame, a rubber suspension system and an axle, wherein the rubber suspension system is the rubber suspension system according to any one of claims 7 to 9, the equalizing beam (1) is connected to the axle, and the saddle (3) is connected to the frame.
